(19) Europäisches Patentamt
European Patent Office
Office européen des brevets

(11) **EP 4 480 667 A1**

(12) **EUROPEAN PATENT APPLICATION**
published in accordance with Art. 153(4) EPC

(43) Date of publication:
**25.12.2024 Bulletin 2024/52**

(21) Application number: **22927275.2**

(22) Date of filing: **24.10.2022**

(51) International Patent Classification (IPC):
**B29C 48/395** *(2019.01)*   **B29C 48/76** *(2019.01)*
**B29C 48/80** *(2019.01)*   **B29C 48/92** *(2019.01)*

(52) Cooperative Patent Classification (CPC):
**B29C 48/395; B29C 48/76; B29C 48/80;
B29C 48/92;** Y02W 30/62

(86) International application number:
**PCT/JP2022/039456**

(87) International publication number:
**WO 2023/157381 (24.08.2023 Gazette 2023/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.02.2022 JP 2022024059**

(71) Applicant: **The Japan Steel Works, Ltd.
Tokyo 141-0032 (JP)**

(72) Inventors:
• **FUKUZAWA, Yohei
Tokyo 141-0032 (JP)**
• **SHIGEMATSU, Tomoko
Tokyo 141-0032 (JP)**

(74) Representative: **Simmons & Simmons LLP
(Munich)
Lehel Carré
Gewürzmühlstraße 11
80538 Munich (DE)**

(54) **SIMULATION DEVICE, SIMULATION METHOD, AND SIMULATION PROGRAM**

(57)    Provided is a simulation device that calculates a prescribed physical amount in an extruder, the simulation device being provided with: an acquisition unit that, when a raw material input to the extruder is a material decomposed in an extruding step, acquires an initial amount of a decomposed component contained in the raw material; and a processing unit that calculates, on the basis of the acquired initial amount, the amount of the decomposed component or the amount of a decomposing substance of the raw material in each region in an axial direction of the extruder.

FIG.9

EP 4 480 667 A1

## Description

Technical Field

The present disclosure relates to a simulation device, a simulation method and a simulation program that calculate predetermined physical quantities for an extruder.

Background Art

A simulation device has been presented that predicts the pressure inside an extruder at regions in the axial direction and the filling rate, the temperature and the like of a resin as a raw material. The simulation device calculates the filling rate, pressure, temperature and the like inside the extruder based on a resin viscosity model, resin physical property data, an extrusion condition and data on a screw construction.

Patent Literature 1 discloses a technique of simulating a devolatilization process in which a volatile solvent contained in the resin is volatilized and removed in the extruder, resulting in decreased concentration of the volatile solvent.

Citation List

Patent Literature

Patent Literature 1: Japanese Patent Application Laid-Open Publication No. 2007-261080

Summary of Invention

Technical Problems

A recycling process using an extruder that reuses waste plastics has been increasing in recent years, including a process of decomposing and removing chlorine from chlorine containing plastics such as polyvinyl chloride or the like discharged from household wastes and of decomposing waste plastics and returning it to monomers.

An object of the present disclosure is to provide a simulation device, a simulation method and a simulation program that are capable of simulating how a raw material is decomposed in an extrusion process using an extruder.

Solution to Problems

A simulation device according to one aspect of the present disclosure comprises an acquisition unit that acquires an initial concentration of a to-be-decomposed component contained in a raw material to be fed into an extruder or an initial; and a processing unit that calculates a concentration of a to-be-decomposed component of a raw material or a concentration of decomposed substance, or an amount of substance or an amount of decomposed substance for each region in an axial direction of the extruder based on an acquired initial concentration or initial amount of substance.

A simulation method according to one aspect of the present disclosure comprises acquiring an initial concentration of a to-be-decomposed component contained in the raw material to be fed into an extruder or an initial amount of substance; and calculating a concentration of a to-be-decomposed component of a raw material or a concentration of decomposed substance, or an amount of substance or an amount of decomposed substance for each region in an axial direction of the extruder based on an acquired initial concentration or initial amount of substance.

A simulation program according to one aspect of the present disclosure causes a computer to execute processing of acquiring an initial concentration of a to-be-decomposed component contained in a raw material to be fed into an extruder or an initial amount of substance; and calculating a concentration of a to-be-decomposed component of a raw material or a concentration of decomposed substance, or an amount of substance or an amount of decomposed substance for each region in an axial direction of the extruder based on an acquired initial concentration or initial amount of substance.

Advantageous Effects of Invention

According to the present disclosure, it is possible to simulate how a raw material is decomposed in an extrusion process using an extruder.

Brief Description of Drawings

FIG. 1 is a block diagram illustrating an example of the configuration of a simulation device according to the present embodiment.
FIG. 2 is a schematic diagram illustrating an example of the configuration of an extruder according to the present embodiment.
FIG. 3 is a flowchart illustrating a simulation method according to the present embodiment.
FIG. 4 is the flowchart illustrating the simulation method according to the present embodiment.
FIG. 5 is a resin property data input screen.
FIG. 6 is a shear viscosity data input screen.
FIG. 7 is an input screen for inputting volatile component physical property data.
FIG. 8 is a graph representing time variation of the chlorine content in a resin raw material.
FIG. 9 is a schematic diagram illustrating a simulation result.

Description of Embodiments

Concrete examples of a simulation device, a simulation method and a simulation program according to an embodiment of the present invention are described with reference to drawings below. It should be noted that the present invention is not limited to these examples, and is represented by the scope of claims, and is intended to include all modifications within the meaning and scope equivalent to the claims. Furthermore, at least parts of the following embodiment and modifications may arbitrarily be combined.

Hereinafter, the present invention will specifically be described with reference to the drawings illustrating the embodiment thereof.

<Simulation Device>

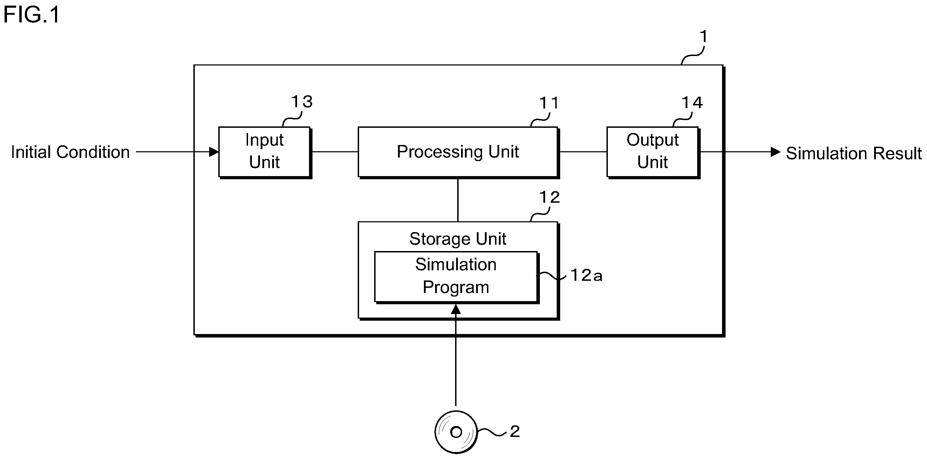

FIG. 1 is a block diagram illustrating an example of the configuration of a simulation device according to the present embodiment. The simulation device 1 according to the present embodiment, which is a computer simulating a decomposition process of a raw resin, is provided with a processing unit 11, a storage unit 12, an input unit 13 and an output unit 14. The following describes a case where a raw resin is a chlorine-containing resin that generates chlorine-based gas by being thermally decomposed. The simulation device 1 simulates a situation in which chlorine-based gas is generated when a raw resin is thermally decomposed in an extrusion process.

The processing unit 11 has an arithmetic circuit such as a CPU (Central Processing Unit), an MPU (Micro-Processing Unit), an ASIC (Application Specific Integrated Circuit), a FPGA (Field-Programmable Gate Array) or the like, an internal storage device such as a ROM (Read Only Memory), a RAM (Random Access Memory) and an I/O terminal or the like. The processing unit 11 reads and executes a simulation program (program product) 12a stored in the storage unit 12 to perform processing of calculating a predetermined physical quantity in a twin-screw extruder. Note that each functional part of the simulation device 1 may be realized in software, or some or all of the functional parts thereof may be realized in hardware.

The storage unit 12 is a storage device such as a hard disk, an EEPROM (Electrically Erasable Programmable ROM), a flash memory or the like. The storage unit 12 stores various programs to be executed by the processing unit 11 and various data necessary for the processing by the processing unit 11. In the present embodiment, the storage unit 12 at least stores a simulation program 12a to be executed by the processing unit 11.

The simulation program 12a may be written into the storage unit 12 at the manufacturing stage of the simulation device 1. The simulation program 12a may be delivered from another information processing apparatus over the network. The simulation device 1 obtains the simulation program 12a through communication and writes it into the storage unit 12. The simulation program 12a may be readably recorded in a recording medium 2 including a semiconductor memory such as a flash memory, an optical disk, a magneto-optical disk and a magnetic disk. The simulation device 1 reads the simulation program 12a and stores it in the storage unit 12.

The input unit 13 is an interface through which data is taken from the outside. The input unit 13, which is, for example, a keyboard or a mouse, acquires data related to an initial condition. The data related to the initial condition is data on the physical properties of a resin as a raw material, the extrusion conditions of the extruder, the screw construction and the like. The details of the initial condition will be described later. Note that the input unit 13 may be configured to read the data on the initial condition from a storage device (not illustrated) or to receive it from another computer.

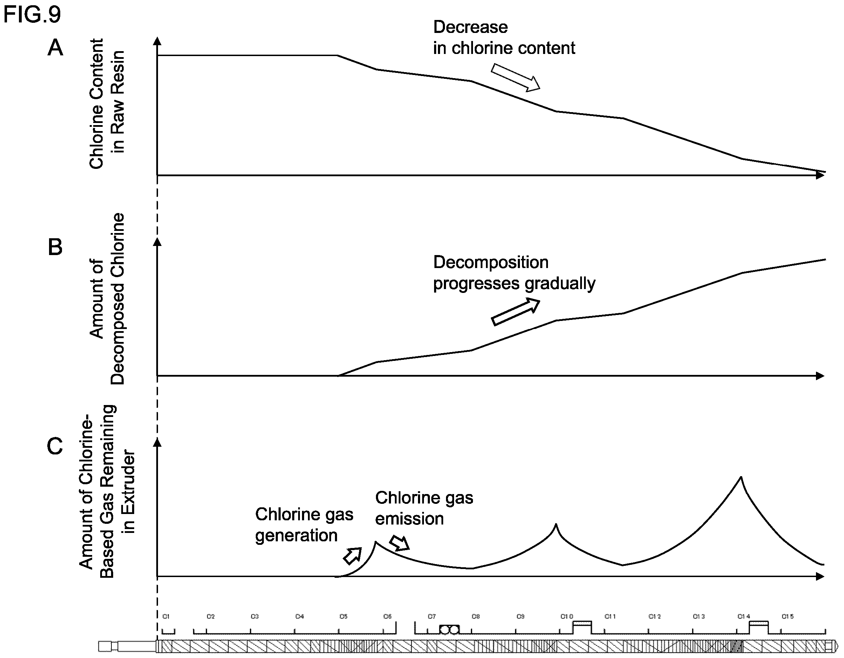

The output unit 14 is a display device such as a liquid crystal display panel, an organic EL display panel or the like. The output unit 14, which is a display device, displays a predetermined physical quantity for the extruder based on the analysis result data output from the processing unit 11. The predetermined physical quantity includes, for example, the chlorine content in a raw resin, the amount of decomposed chlorine and the amount of chlorine-based gas remaining in the cylinder 3 and the like. The output unit 14 displays the distributions of the chlorine content in a raw resin, the amount of decomposed chlorine and the amount of chlorine-based gas remaining in the cylinder 3 (see FIG. 9).

The measurement method and expression manner for the amount of chlorine, decomposed chlorine and chlorine-based gas may be represented by an amount of substance or a concentration, not limited to a particular one. The unit is also not limited to a particular one.

The aforementioned simulation device 1 may be a multi-computer configured by including multiple computers, and may be a virtual machine virtually constructed by software. In addition, the simulation device 1 may be constructed as a cloud server.

<Extruder>

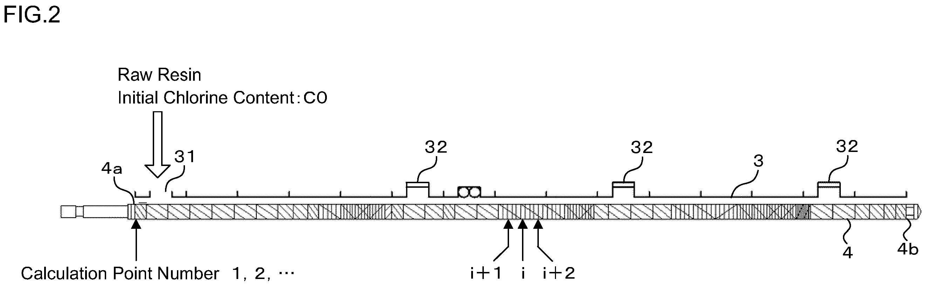

FIG. 2 is a schematic view illustrating an example of the configuration of the extruder according to the present embodiment. The extruder to be simulated is provided with a screw 4 that melts and kneads a raw resin and a cylinder 3 into which the screw 4 is rotatably inserted.

The cylinder 3 is provided with a hopper 31 from which a raw material is fed and one or more vents 32. The hopper 31 is located more toward the root (left side in FIG. 2). The vent 32 is a vacuum vent, for example, and exhausts chlorine-based gas inside the cylinder 3 by vacuum suction. The exhausted chlorine-based gas is processed in an external gas treatment facility.

The screw 4 is configured to be a bar of screw 4 by combining multiple types of screw pieces integrated together. For example, a flight screw-shaped forward flight piece that carries a raw material in a forward direction, a reverse flight piece that carries a raw material in a reverse direction, a kneading piece that kneads the raw material and the like are combined in an order and at positions according to the characteristics of the raw material, to form the screw 4.

<Simulation Method>

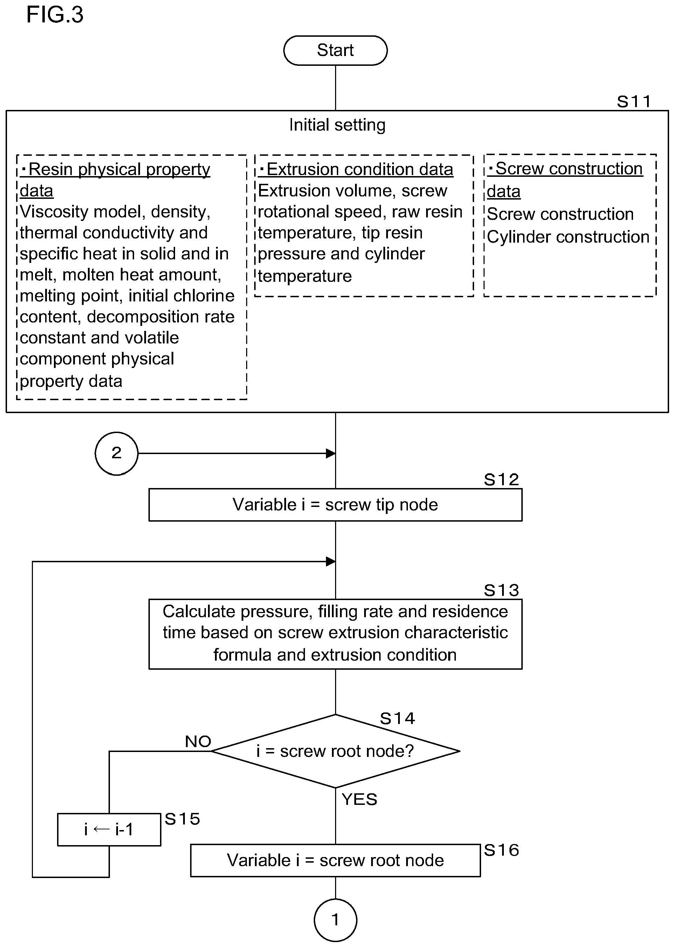

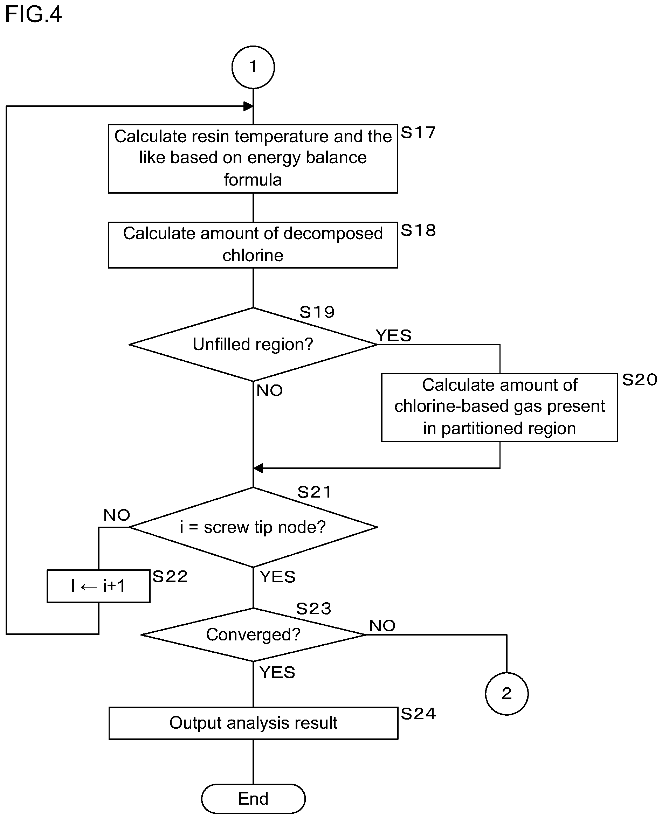

FIGs. 3 and 4 illustrate a flowchart illustrating a simulation method according to the present embodiment. The processing unit 11 of the simulation device 1 first performs initial setting (step S11).

Specifically, the processing unit 11 further acquires resin physical property data indicating a viscosity model of a raw resin to be fed into the extruder, the density, the thermal conductivity and the specific heat in a solid, the density, the thermal conductivity and the specific heat in a melt, a molten heat amount, a melting point, the initial chlorine content, a decomposition rate constant and the like of a raw resin. The processing unit 11 acquires volatile component physical property data.

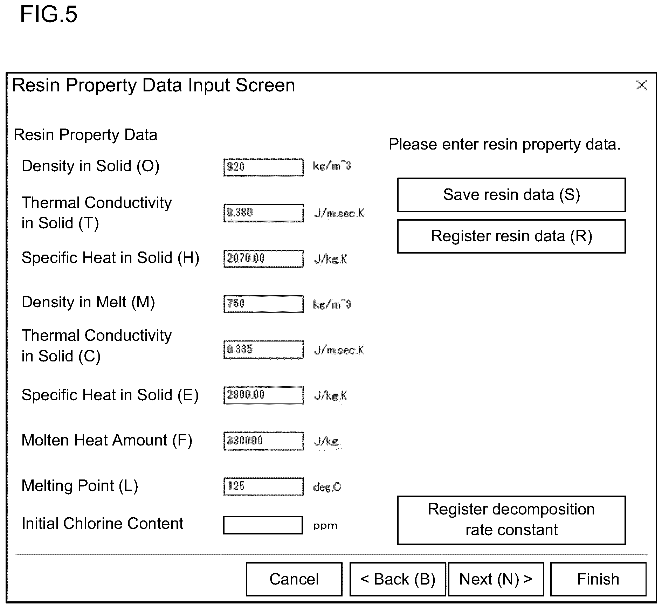

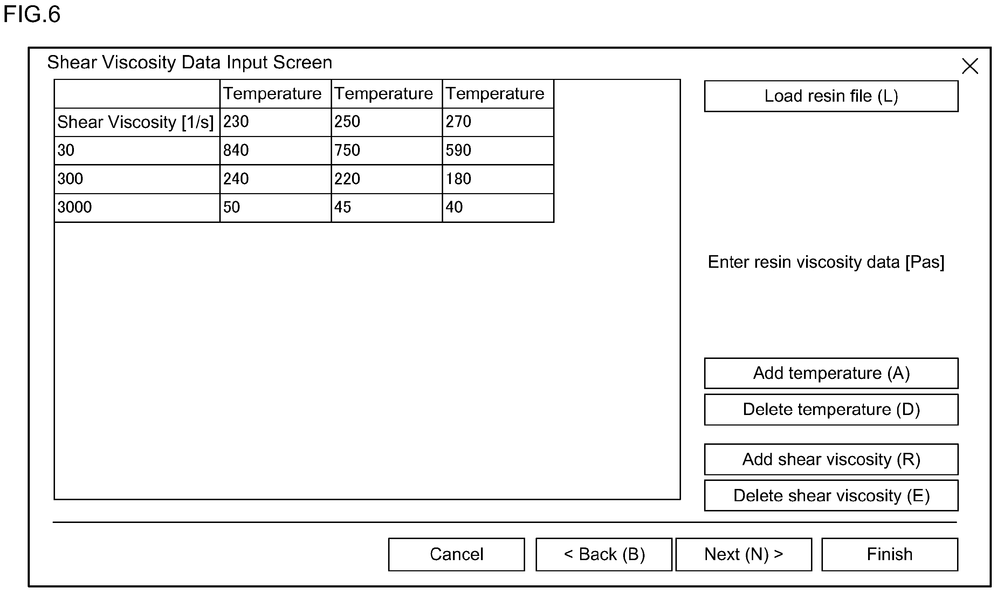

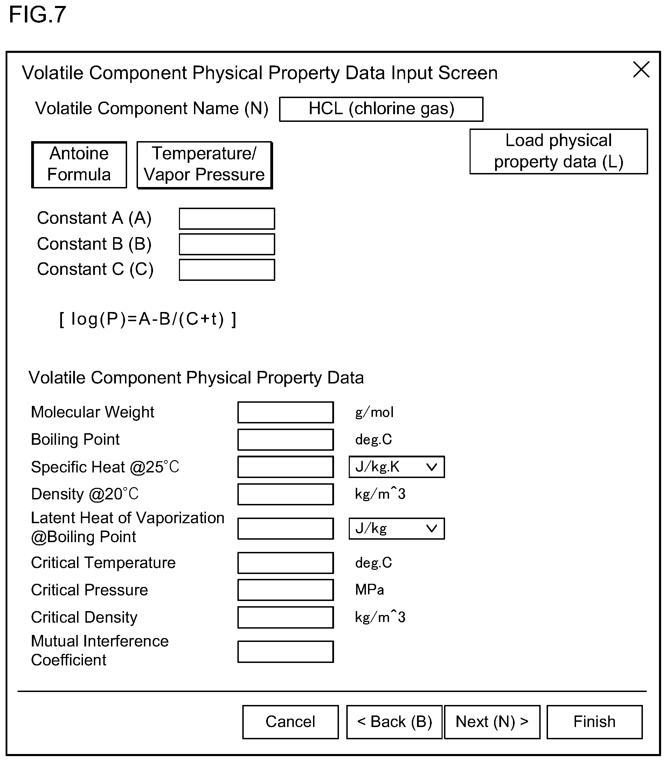

FIG. 5 is a resin property data input screen. FIG. 6 is a shear viscosity data input screen. FIG. 7 is a volatile component physical property data input screen. The processing unit 11 displays the resin property data input screen illustrated in FIG. 5 to accept input of physical property data. The processing unit 11 accepts, on the resin property data input screen, the density, the thermal conductivity and the specific heat when the raw resin is a solid, the density, the thermal conductivity and the specific heat when the raw resin is a melt, the molten heat amount, the melting point, the initial chlorine content and the decomposition rate constant of a raw resin and stores the accepted data in the storage unit 12. The decomposition rate constant has temperature dependence. The decomposition rate constant data is array data in which multiple resin temperatures and decomposition rate constants at the respective temperatures are associated with each other. The processing unit 11 displays the shear viscosity data input screen illustrated in FIG. 6 to accept data related to a viscosity model. If the molten resin is a pseudoplastic non-Newtonian fluid whose shear viscosity decreases with increasing shear rate, the Cross model with temperature dependence can be used as a constitutive equation to express the viscosity of the fluid. The processing unit 11 accepts the relationship between a shear rate, a temperature and a viscosity on the shear viscosity data input screen, and stores the received shear viscosity data in the storage unit 12. The processing unit 11 displays the volatile component physical property data input screen illustrated in FIG. 9 to accept volatile component physical property data. The processing unit 11 accepts, on the volatile component physical property data input screen, a model equation representing a property related to vapor pressure, a molecular weight, a boiling point, a specific heat and a density at a given temperature, a latent heat of vaporization, a critical temperature, a critical pressure, a critical density, a mutual interference coefficient and the like of chlorine-based gas regarded as a volatile component, and stores the accepted data in the storage unit 12.

The processing unit 11 acquires extrusion condition data such as an extrusion output of a raw resin, a screw rotational speed, a raw resin temperature, a tip resin pressure, a cylinder temperature and the like.

The processing unit 11 acquires screw construction data indicating the positions and the alignment of multiple types of screw pieces, the screw diameter, the cylinder diameter, the position of the hopper 31 in the longitudinal direction of the screw 4 and the like. The screw construction data is data defining the construction of the extruder illustrated in FIG. 2. Furthermore, the processing unit 11 acquires data indicating a viscous heating value defined by the construction of the screw 4.

By the processing at step S11, the information necessary for the arithmetic processing at steps S13, S17, S18 and S20, which will be described later, is acquired. Note that the processing unit 11 or the input unit 13 that executes the processing at step S11 functions as an acquisition unit that acquires an initial amount of the chlorine component contained in the raw resin.

The processing unit 11 substitutes the variable i with a numerical value indicating the position of a screw tip node 4b (step S12). As illustrated in FIG. 2, the positions in the longitudinal direction of the screw 4 can be denoted by calculation point numbers. Specifically, a calculation point number is assigned to each of partitioned regions formed by partitioning the space inside the cylinder 3 into multiple regions along the axial direction of the extruder. The calculation point number is expressed as the variable i. The value of the variable i increases from a screw root node 4a toward the screw tip node 4b. The screw root node 4a is the node at the root of the screw 4 on the left in FIG. 2 while the screw tip node 4b is the node at the tip of the screw 4 on the right in FIG. 2.

Next, the processing unit 11 calculates the pressure, filling rate and residence time based on the screw characteristic formula and the extrusion condition (step S13).

The screw characteristic formula is expressed by formula (1) below.

$$\Delta P = \frac{(\alpha - \bar{Q})}{\beta} \bar{L} \eta N \qquad (1)$$

where

$$\bar{Q} = \frac{Q}{ND^3} \, , \, \bar{L} = \frac{L}{D}$$

ΔP : pressure loss in length L of screw

$Q$ : volume flow rate (extrusion output / density)
$\alpha$ : screw characteristic parameter (coefficient of pulling fluid of screw)
$\beta$ : screw characteristic parameter (coefficient of pressure fluid of screw)
$L$ : length of screw
$\eta$ : viscosity of resin material
$N$ : screw rotational speed
$D$ : cylinder diameter

The pressure loss $\Delta P$ and the known tip resin pressure P0 are used to calculate the pressure P at the position denoted by the variable i. The processing unit 11 can sequentially calculate the pressure loss $\Delta P$ from the downstream side to the upstream side (step S14 and step S15) to thereby evaluate the pressure in each of the partitioned regions.

The filling rate is expressed by formula (2) below.

$$Fill = \bar{Q} / \alpha \qquad (2)$$

where

$Fill$ : filling rate
$\alpha$ : screw characteristic parameter

The residence time is expressed by formula (3) below.

$$t = V \times Fill/Q \qquad (3)$$

where

$t$ : residence time
$V$ : volumetric capacity of channel
$Fill$ : filling rate

The processing unit 11 then determines whether or not the variable i is a value representing the screw root node 4a (step S 14). If determining that the variable i is not the value representing the screw root node 4a (step S14: NO), the processing unit 11 decrements the variable i by one (step S15) and returns the processing to step S13.

If determining that the variable i is the value representing the screw root node 4a (step S14: YES), the processing unit 11 substitutes the variable i with the numerical value representing the position of the screw root node 4a (step S 16). Note that the processing at step S16 is not necessarily performed.

Next, the processing unit 11 uses an energy balance formula to calculate the resin temperature, solid phase rate, motive power, torque, ESP, dispersion, distribution and the like (step S17). The resin temperature particularly related to calculation of the amount of decomposed chlorine will be described.

The energy balance formula is expressed by formula (4) below. Note that the contact area between the resin material and the cylinder 3 is obtained by multiplying the area of the cylinder at the partitioned region by the filling rate.

$$Q \cdot \rho \cdot Cp \cdot T_{out} - Q \cdot \rho \cdot Cp \cdot T_{in} = h \cdot T \cdot A - h \cdot Tb \cdot A + Ev \quad (4)$$

where

Q: volume flow rate (extrusion output/density)
$\rho$: density of resin material
Cp: specific heat of resin material
Tb: cylinder temperature
T: resin temperature
A: contact area between resin material and cylinder
h: coefficient of heat transfer
Ev: viscous heat amount
$T_{out}$ : temperature of resin material flowing from partitioned region
$T_{in}$ : temperature of resin material flowing into partitioned region

The aforementioned formula is reduced to obtain the following formula (5). The temperature of the raw resin evaluated one step before can be used for the resin temperature T of the first term on the right side.

$$\Delta T = T_{out} - T_{in} = (h \cdot T \cdot A - h \cdot Tb \cdot A + Ev)/Q/\rho/Cp \quad (5)$$

By substituting the temperature difference $\Delta T$ evaluated by formula (5) above into formula (6) below, the resin temperature at the current step can be obtained.

$$T_n = T_{n-1} + \Delta T \quad (6)$$

$T_n$ : resin temperature at n-th step
$T_{n-1}$: resin temperature at (n-1)th step

The processing unit 11, having completed the processing at step S17, calculates the amount of decomposed chlorine and the like (step S18).

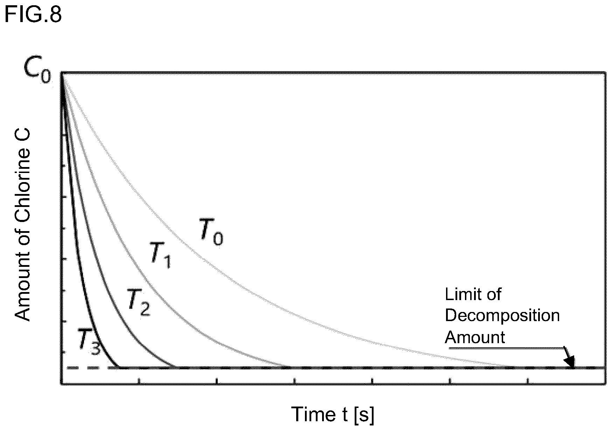

FIG. 8 is a graph representing time variation of the chlorine content in a resin raw material. The horizontal axis indicates the time while the vertical axis indicates the chlorine content in the raw resin. As illustrated in FIG. 8, the chlorine content in the raw resin exponentially decreases with time by thermal decomposition. The decreasing rate is determined by a decomposition rate constant. The decomposition rate constant k (T) has temperature dependence as illustrated in FIG. 8. The decomposition rate constant k (T) is experimentally determined. The processing unit 11 accepts the decomposition rate constant k (T) at step S11 and stores it in the storage unit 12.

The processing unit 11 can calculate the chlorine content in the raw resin for each partitioned region based on the initial chlorine content and the decomposition rate constant data acquired at step S11, the residence time calculated at step S13 and the resin temperature calculated at step S17. Specifically, the chlorine content in the raw resin is expressed by formula (7) below, for example. The decomposition rate constant k is a constant with temperature dependence and is defined based on the resin temperature calculated at step S17.

$$C = C_0 e^{-kt} \qquad (7)$$

where

C : chlorine content
$C_0$ : initial chlorine content
k : decomposition rate constant
t : decomposition time

The processing unit 11 can sequentially calculate the chlorine content in the raw resin from the downstream side to the upstream side (step S21 and step S22) to thereby evaluate the chlorine content in the raw resin for each of the partitioned regions. The chlorine content is the amount of chlorine contained in the raw resin as the chlorine component not being subjected to thermal decomposition.

The processing unit 11 subtracts the chlorine content obtained by formula (7) above from the initial chlorine content to thereby calculate the amount of decomposed chlorine generated by the thermal decomposition of the raw resin.

Next, the processing unit 11 determines whether or not each partitioned region indicated by the variable i is an unfilled region (step S19). For example, the processing unit 11 determines whether or not the filling rate calculated at step S13 is less than a predetermined threshold. If determining that the partitioned region is the unfilled region (step S 19: YES), the processing unit 11 calculates the amount of chlorine-based gas present in the partitioned region indicated by the variable i (step S20). Specifically, the processing unit 11 calculates the amount of chlorine-based gas, regarding the release of chlorine-based gas generated by the thermal decomposition of the raw resin as a devolatilization phenomenon. In other words, the release of chlorine-based gas from a raw resin by the thermal decomposition of the raw resin is regarded as a devolatilization phenomenon in which the chlorine-based gas component dissolved in the raw material resin is changed in phase into a gas (gas bubble) under reduced pressure, and the chlorine-based gas is degassed on the free surface of the raw resin.

The theoretical model of the surface refreshment devolatilization process in the extruder is typically evaluated by a method according to formula (8) below proposed by G. A. Latinen ("Devolatization of viscous polymer systems," Adv. Chem. Ser. 34, 235 (1962)). If the devolatilized diffusion coefficient in formula (8) is defined as K'=KD^(1/2) ρ P and the surface area of the raw resin from which the chlorine-based gas corresponding to the volatile portions is scattered from the devolatilized region, which is unfilled region, is defined as L'=SL, formula (8) can be expressed by formula (9). The devolatilization diffusion coefficient K' is a parameter that is greatly affected by the physical properties of the raw resin and the shape of the screw. When the devolatilization efficiency X is obtained from the right side of formula (9) below, the concentration of the outflow volatile portions Cout, that is, the chlorine concentration of the chlorine-based gas contained in the devolatilized raw resin can be obtained by formulas (10) and (11) below.

$$ln\left(\frac{C_{in}-C_A}{C_{out}-C_A}\right) = K\rho_P \frac{SL(DN)^{\frac{1}{2}}}{Q} \qquad (8)$$

$$\frac{C_{in}-C_A}{C_{out}-C_A} = X = exp\left(\frac{K'L'N^{\frac{1}{2}}}{Q}\right) \qquad (9)$$

$$C_{out} = C_A + \frac{C_{in}-C_A}{X} \qquad (10)$$

$$C_A = \frac{P_C}{P_V}\frac{\rho_S}{\rho_P} / exp(1+\chi) \qquad (11)$$

where

$C_{in}$ : concentration of inflow volatile portions
$C_{out}$ : concentration of outflow volatile portions
$C_A$ : equilibrium concentration in devolatilized region
K : mass transfer coefficient
S : exposed surface area per unit length
L : length of devolatilized region
D : diffusion coefficient
N : screw rotational speed
Q : extrusion output
K' : parameter based on devolatilization diffusion coefficient
L' : surface area of resin from which volatile components fly out in devolatilized region
$P_C$ : ambient pressure
$P_V$ : vapor pressure of volatile components
$P_S$ : density of volatile components
$\rho_p$ : resin density
X : devolatilization efficiency
X : mutual interference coefficient

If determining that the partitioned region is not the unfilled region (step S19: NO) or if the processing at step S20 is completed, the processing unit 11 determines whether or not the variable i is a value representing the screw tip node 4b (step S21). If determining that the variable i is not the value representing the screw tip node 4b (step S21: NO), the processing unit 11 increments the variable i by one (step S22) and returns the processing to step S17.

If determining that the variable i is the value representing the screw tip node 4b (step S21: YES), the processing unit 11 determines whether or not the simulation result has converged (step S23). If determining that the simulation result has not converged (step S23: NO), the processing unit 11 returns the processing to step S12 to repeat the processing through steps S12 to S21.

If determining that the simulation result has converged (step S23: YES), the processing unit 11 outputs the analysis result via the output unit 14 (step S24) and ends the processing.

FIG. 9 is a schematic view illustrating a simulation result. The horizontal axis of the graphs in FIGs. 9A to 9C represents the variable i, that is, the position in the longitudinal direction of the screw 4. The vertical axis in FIG. 9A represents the chlorine content in the raw resin, the vertical axis in FIG. 9B represents the amount of decomposed chlorine, and the vertical axis in FIG. 9C represents the amount of chlorine-based gas present in the cylinder 3 of the extruder. As illustrated in FIG. 9A and FIG. 9B, the raw resin fed into the hopper 31 is progressively subject to thermal decomposition during the course of being transferred from the upstream side to the downstream side (from the root to the tip of the screw 4). This decreases the chlorine content in the raw resin while increasing the amount of decomposed chlorine. The amount of decomposed chlorine illustrated in FIG. 9B is the total amount of chlorine-based gas generated by the thermal decomposition from the raw resins present in the partitioned regions in the axial direction of the extruder. The total amount of chlorine-based gas refers to a total sum of chlorine-based gas generated in the course of the raw resin being transferred from the upstream side to the downstream side (from the root to the tip of the screw 4).

It can be found that, in a partitioned region with a high filing rate and long residence time, the decomposition of the raw resin progresses by an amount corresponding to the residence time, generating a large amount of chlorine-based gas. It can be found, by contrast that a small amount of chlorine-based gas is generated in a partitioned region with a short residence time.

Meanwhile, as illustrated in FIG. 9C, the raw resin is thermally decomposed in the course of being transferred from the upstream side to the downstream side (from the root to the tip of the screw 4), which increases the amount of chlorine-based gas inside the cylinder 3. The amount of chlorine-based gas that is present in each partitioned region in the axial direction of the extruder is exhausted as chlorine-based gas in the unfilled region and thus reduced. In the case where the raw resin is present in the filled region, the chlorine-based gas is not exhausted and thus not reduced. The raw resin is transferred to the tip end while repeating such exhaust of chlorine-based gas in a partitioned region with a short residence time.

The processing unit 11 can output and display simulation results as illustrated in FIGs. 9A to 9C. The user of the simulation device 1 can grasp the situation of a chlorine containing resin being thermally decomposed, the amount of chlorine-based gas inside the cylinder 3 and the situation of the chlorine-based gas having been thermally decomposed being exhausted.

The simulation device 1 thus constructed makes it possible to simulate the manner in which a raw resin is decomposed in the extrusion process with the extruder.

In addition, considering the residence time of the raw resin in each of the partitioned regions in the axial direction of the extruder, the processing unit 11 can calculate in details the chlorine content and the amount of decomposed chlorine in the raw resin in each of the partitioned regions.

Furthermore, considering the residence time and the resin temperature of the raw resin in each of the partitioned regions in the axial direction of the extruder, the processing unit 11 can calculate in details the chlorine content and the amount of decomposed chlorine in the raw resin in each of the partitioned regions.

In addition, the processing unit 11 can output data representing the distributions of the amount of chlorine and the amount of decomposed chlorine in the axial direction of the extruder and display the image representing the distributions.

Furthermore, considering the filling rate and the exhaust of the chlorine-based gas in each of the partitioned regions in the axial direction of the extruder, the processing unit 11 can calculate the amount of chlorine-based gas remaining inside the cylinder 3.

Moreover, the processing unit 11 can output data indicating the distributions of the amount of chlorine-based gas remaining inside the cylinder 3 in the axial direction of the extruder and display the image indicating the distributions.

While the raw resin is exemplified by a chlorine containing resin in the present embodiment, the type of the raw resin is not limited to a particular one. The gas generated by decomposition is also not limited to chlorine-based gas. The substance produced by decomposition is not limited to gas. For example, the decomposition situation may be simulated regarding the substance to be decomposed as a polymer contained in the raw resin and the decomposed substance as monomers. Though the decomposition method in the extrusion process is exemplified by the thermal decomposition though not limited thereto. The simulation device 1 according to Embodiment 1 can simulate the decomposition process of any raw material that decomposes in the extrusion process to generate gas.

In addition, though the graphs to be output and displayed are exemplified by the chlorine content in the raw resin, the amount of decomposed chlorine and the amount of chlorine-based gas remaining in the cylinder 3, they may output data indicating the distributions of other physical properties obtained by using formula (7) above.

Reference Signs List

| 1 | simulation device |
|---|---|
| 2 | recording medium |
| 3 | cylinders |
| 4 | screw |
| 4a | screw root node |
| 4b | screw tip node |
| 11 | processing unit |
| 12 | storage unit |
| 12a | simulation program |
| 13 | input unit (acquisition unit) |
| 14 | output unit |
| 31 | hopper |
| 32 | vent |

**Claims**

1. A simulation device calculating a predetermined physical quantity for an extruder, comprising:

   an acquisition unit that acquires, in a case where a raw material to be fed into the extruder is a material decomposing in an extrusion process, an initial amount of a to-be-decomposed component contained in the raw material; and
   a processing unit that calculates an amount of a to-be-decomposed component in a raw material or an amount of decomposed substance for each region in an axial direction of the extruder based on an acquired initial amount.

2. The simulation device according to claim 1, wherein

   the processing unit
   calculates a residence time of a raw material for each region in an axial direction of the extruder, and
   calculates an amount of a to-be-decomposed component in a raw material or an amount of decomposed substance for each region in an axial direction of the extruder based on an acquired initial amount and calculated residence time of a raw material for each region.

3. The simulation device according to claim 1 or 2, wherein

   the processing unit
   calculates a residence time of a raw material for each region in an axial direction of the extruder based on a screw characteristic and an extrusion condition of the extruder,
calculates a temperature of a raw material for each region in an axial direction of the extruder based on an energy balance condition, and
calculates an amount of a to-be-decomposed component in a raw material or an amount of decomposed substance for each region in an axial direction of the extruder based an acquired initial amount, calculated residence time of a material for each region and a decomposition rate constant according to a calculated resin temperature.

4. The simulation device according to any one of claims 1 to 3, wherein the processing unit outputs data representing a distribution of an amount of a to-be-decomposed component in a raw material or an amount of decomposed substance in an axial direction of the extruder.

5. The simulation device according to any one of claims 1 to 4, wherein

   the raw material to be fed into the extruder is a material that decomposes to generate a gas in an extrusion process, and
   the processing unit
   calculates a filling rate of a raw material for each region in an axial direction of the extruder based on a screw characteristic and an extrusion condition of the extruder and determines whether or not each region is an unfilled region, and
   subtracts from an amount of decomposed substance in a region that is determined to be an unfilled region, an amount of decomposed substance to be exhausted.

6. The simulation device according to claim 5, wherein the processing unit outputs data indicating a distribution of an amount of decomposed substance in an axial direction of the extruder that remains inside a screw of the extruder.

7. A simulation method calculating a predetermined physical quantity for an extruder, comprising:

   acquiring, in a case where a raw material to be fed into the extruder is a material decomposing in an extrusion process, an initial amount of a to-be-decomposed component contained in the raw material; and
   calculating an amount of a to-be-decomposed component in a raw material or an amount of decomposed substance for each region in an axial direction of the extruder based on an acquired initial amount.

8. A simulation program causing a computer to perform processing of calculating a predetermined physical quantity for an extruder, the program causing the computer to execute the processing of:

acquiring, in a case where a raw material to be fed into the extruder is a material decomposing in an extrusion process, an initial amount of a to-be-decomposed component contained in the raw material; and

calculating an amount of a to-be-decomposed component in a raw material or an amount of decomposed substance for each region in an axial direction of the extruder based on an acquired initial amount.

FIG.1

Initial Condition →

Simulation Result →

1

13 Input Unit

11 Processing Unit

14 Output Unit

12 Storage Unit

12a Simulation Program

2

FIG.2

Raw Resin
Initial Chlorine Content: C0

Calculation Point Number  1, 2, …

# FIG.3

```
        ( Start )
            |
```

S11

**Initial setting**

**·Resin physical property data**
Viscosity model, density, thermal conductivity and specific heat in solid and in melt, molten heat amount, melting point, initial chlorine content, decomposition rate constant and volatile component physical property data

**·Extrusion condition data**
Extrusion volume, screw rotational speed, raw resin temperature, tip resin pressure and cylinder temperature

**·Screw construction data**
Screw construction
Cylinder construction

(2) →

S12

Variable i = screw tip node

S13

Calculate pressure, filling rate and residence time based on screw extrusion characteristic formula and extrusion condition

S14

NO ← i = screw root node?

YES

S15
i ← i-1

S16
Variable i = screw root node

(1)

# FIG.4

```
                    ( 1 )
                      │
      ┌───────────────┤
      │   ┌──────────────────────────────┐
      │   │ Calculate resin temperature   │ S17
      │   │ and the like based on energy  │
      │   │ balance formula               │
      │   └──────────────────────────────┘
      │   ┌──────────────────────────────┐
      │   │ Calculate amount of decomposed │ S18
      │   │ chlorine                      │
      │   └──────────────────────────────┘
      │              S19
      │          ◇ Unfilled region? ◇───YES───┐
      │              │ NO                       │
      │              │        ┌──────────────────────┐ S20
      │              │        │ Calculate amount of   │
      │              │        │ chlorine-based gas    │
      │              │        │ present in partitioned │
      │              │        │ region                │
      │              │        └──────────────────────┘
      │              ├◄───────────────┘
      │        S21
      │  NO ◇ i = screw tip node? ◇
      │   │            │ YES
      │ ┌──────┐ S22   │     S23
      │ │ I←i+1│       ◇ Converged? ◇───NO───( 2 )
      └─┴──────┘       │ YES
                 ┌──────────────────┐ S24
                 │ Output analysis   │
                 │ result            │
                 └──────────────────┘
                      │
                   ( End )
```

FIG.5

| Resin Property Data Input Screen | | ✕ |
|---|---|---|

**Resin Property Data**

Please enter resin property data.

| Density in Solid (O) | 920 | kg/m^3 |
|---|---|---|
| Thermal Conductivity in Solid (T) | 0.380 | J/m.sec.K |
| Specific Heat in Solid (H) | 2070.00 | J/kg.K |
| Density in Melt (M) | 750 | kg/m^3 |
| Thermal Conductivity in Solid (C) | 0.335 | J/m.sec.K |
| Specific Heat in Solid (E) | 2800.00 | J/kg.K |
| Molten Heat Amount (F) | 330000 | J/kg |
| Melting Point (L) | 125 | deg.C |
| Initial Chlorine Content | | ppm |

Save resin data (S)

Register resin data (R)

Register decomposition rate constant

| Cancel | < Back (B) | Next (N) > | Finish |
|---|---|---|---|

# FIG.6

EP 4 480 667 A1

**Shear Viscosity Data Input Screen** ✕

| | Temperature | Temperature | Temperature |
|---|---|---|---|
| Shear Viscosity [1/s] | 230 | 250 | 270 |
| 30 | 840 | 750 | 590 |
| 300 | 240 | 220 | 180 |
| 3000 | 50 | 45 | 40 |

Load resin file (L)

Enter resin viscosity data [Pas]

Add temperature (A)

Delete temperature (D)

Add shear viscosity (R)

Delete shear viscosity (E)

Cancel   < Back (B)   Next (N) >   Finish

# FIG.7

Volatile Component Physical Property Data Input Screen       ✕

Volatile Component Name (N)   | HCL (chlorine gas) |

| Antoine Formula | Temperature/ Vapor Pressure |     | Load physical property data (L) |

Constant A (A)   [      ]
Constant B (B)   [      ]
Constant C (C)   [      ]

$[ \log(P)=A-B/(C+t) ]$

Volatile Component Physical Property Data

| Molecular Weight | [    ] | g/mol |
| Boiling Point | [    ] | deg.C |
| Specific Heat @25°C | [    ] | J/kg.K ∨ |
| Density @20°C | [    ] | kg/m^3 |
| Latent Heat of Vaporization @Boiling Point | [    ] | J/kg ∨ |
| Critical Temperature | [    ] | deg.C |
| Critical Pressure | [    ] | MPa |
| Critical Density | [    ] | kg/m^3 |
| Mutual Interference Coefficient | [    ] | |

| Cancel | < Back (B) | Next (N) > | Finish |

FIG.8

FIG.9

A — Chlorine Content in Raw Resin

Decrease in chlorine content

B — Amount of Decomposed Chlorine

Decomposition progresses gradually

C — Amount of Chlorine-Based Gas Remaining in Extruder

Chlorine gas generation

Chlorine gas emission

C1 C2 C3 C4 C5 C6 C7 C8 C9 C10 C11 C12 C13 C14 C15

## INTERNATIONAL SEARCH REPORT

| International application No. |
|---|
| **PCT/JP2022/039456** |

**A. CLASSIFICATION OF SUBJECT MATTER**

*B29C 48/395*(2019.01)i; *B29C 48/76*(2019.01)i; *B29C 48/80*(2019.01)i; *B29C 48/92*(2019.01)i
FI: B29C48/92; B29C48/395; B29C48/80; B29C48/76

According to International Patent Classification (IPC) or to both national classification and IPC

**B. FIELDS SEARCHED**

Minimum documentation searched (classification system followed by classification symbols)

B29C48/00-48/96; B29B7/00-7/94

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-173276 A (JAPAN STEEL WORKS LTD.) 08 September 2011 (2011-09-08) entire text | 1-8 |
| A | JP 2007-261080 A (JAPAN STEEL WORKS LTD.) 11 October 2007 (2007-10-11) entire text | 1-8 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 December 2022** | **20 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/039456**

| Patent document cited in search report | | | Publication date (day/month/year) | Patent family member(s) | | | Publication date (day/month/year) |
|---|---|---|---|---|---|---|---|
| JP | 2011-173276 | A | 08 September 2011 | (Family: none) | | | |
| JP | 2007-261080 | A | 11 October 2007 | US<br>entire text<br>EP | 2009/0202669<br><br>2000283 | A1<br><br>A2 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007261080 A

**Non-patent literature cited in the description**

- **G. A. LATINEN**. Devolatization of viscous polymer systems. *Adv. Chem. Ser.*, 1962, vol. 34, 235